# EUROPÄISCHE PATENTSCHRIFT

(11) **EP 0 677 131 B1**
(45) Veröffentlichungstag und Bekanntmachung des Hinweises auf die Patenterteilung: **09.10.1996**
(21) Anmeldenummer: 94902700.7
(22) Anmeldetag: 07.12.1993
(51) Int. Cl.: E05B 63/04, E05C 9/02, E05C 9/18

(54) **VERSCHLUSSVORRICHTUNG FÜR TÜREN VON GEHÄUSEN ODER SCHRÄNKEN**
CLOSING DEVICE FOR DOORS OF HOUSINGS OR CUPBOARDS
DISPOSITIF DE FERMETURE POUR PORTES DE BOITIERS OU DE PLACARDS

(30) Priorität: 22.12.1992 DE 9217546 U; 20.04.1993 DE 9305893 U; 05.10.1993 DE 9315055 U
(43) Veröffentlichungstag der Anmeldung: 18.10.1995
(73) Patentinhaber: Ramsauer, Dieter, D-42555 Velbert (DE)
(72) Erfinder: Ramsauer, Dieter, D-42555 Velbert (DE)
(74) Vertreter: Stratmann, Ernst, Dr.-Ing.
(86) Internationale Anmeldenummer: EP9303437
(87) Internationale Veröffentlichungsnummer: WO9415049

(56) Entgegenhaltungen:
- EP-A- 0 261 266
- EP-A- 0 443 177
- EP-A- 0 504 044
- GB-A- 2 072 740
- GB-A- 2 208 524

## Beschreibung

### Technisches Gebiet:

Die Erfindung betrifft eine Schwenkhebelverschlußvorrichtung für Türen von Gehäusen oder Schränken, vorzugsweise aus dünnem Wandmaterial wie Stahlblech, insbesondere zur Betätigung von im Abkantungsraum von Blechschranktüren einbringbaren Verriegelungssystemen wie Verschlußstangen, die Schwenkhebelverschlußvorrichtung bestehend aus einem Türschild, in welches eine Grundplatte mit einem Schwenkhebel als Handhabe und mit Ausformungen zum Eingriff in türseitige Aussparungen aufweist, wobei eine erste Ausformung an einem Ende des Türschilds im Bereich einer Schließeinrichtung für den Schwenkhebel gebildet ist, und eine andere oder zweite Ausformung am anderen Ende des Türschilds ausgebildet ist, die bezüglich der Betätigungsachse des Schwenkhebels rotationssymmetrisch um 180° versetzt am Türschild angeordnet ist, wobei eine Verschlußstange vorgesehen ist, welche über eine Zuhaltung in Wirkverbindung mit dem Schwenkhebel und einem Gelenkdornritzel steht und mit schrankseitigen Aufnahmen für Verriegelungselemente versehen ist, die im Bereich der Verschlußstange ausgebildet sind.

### Stand der Technik:

Eine derartige Schwenkhebelverschlußvorrichtung ist aus der EP 0504044 A1 bereits bekannt.

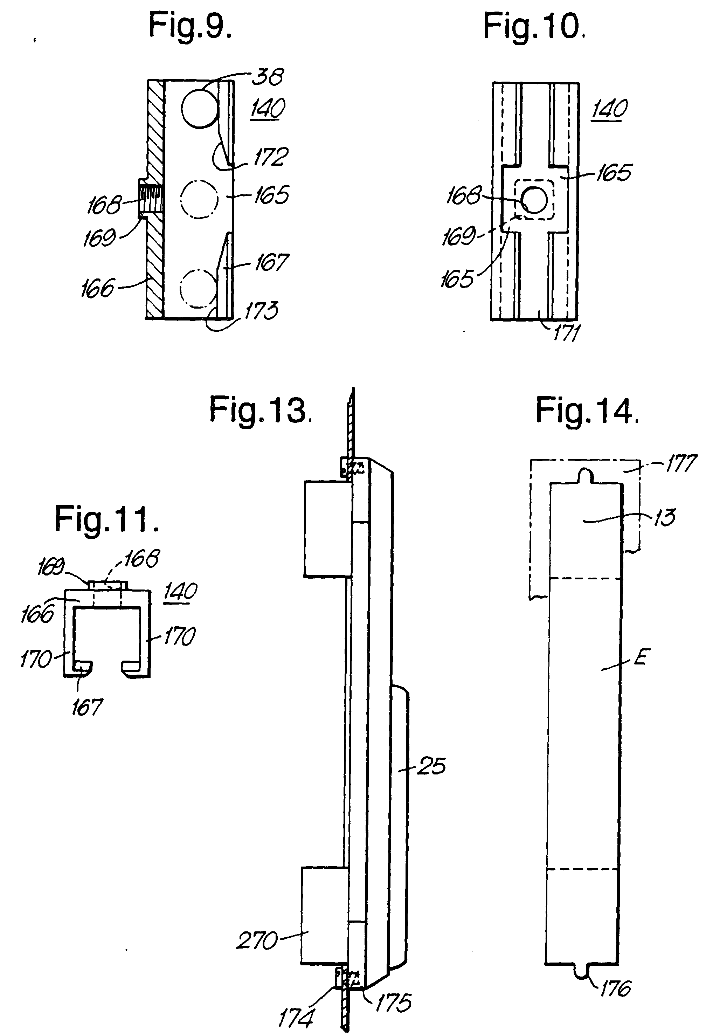

Diese Verschlußvorrichtung stellt wiederum eine Verbesserung einer aus der EP 0261266 B1 bekannten Verschlußvorrichtung dar. Die aus den beiden Druckschriften bekannten Verschlußvorrichtungen sind jeweils für Schaltschränke vorgesehen, aber auch für Schränke oder Gehäuse, die an Arbeitsplätzen für Elektroniker oder Techniker zur Aufnahme von elektronischen Geräten oder Baugruppen Anwendung finden. Derartige Schränke oder Gehäuse sind meist in 19"-Bauweise ausgebildet, können aber auch in metrischer Bauweise hergestellt sein. Um einen möglichst großen und leicht zugänglichen, nutzbaren Innenraum zur Verfügung zu haben, hat sich die Verwendung von besonders schmalen Gegenanschlägen als zweckmäßig erwiesen, beispielsweise dient ein schmales Hohlraumprofil als Rahmengestell, an welchen Seiten- oder Rückwände sowie Türen befestigt werden. Alternativ können auch aus Blech gebogene Schaltschränke vorgesehen sein, die einen Abkantungsbereich aufweisen, in den in zweckmäßiger Weise Verriegelungseinrichtungen, wie z. B. Stangenverschlüsse untergebracht werden, wie aus den eingangs genannten Druckschriften bereits bekannt. Bei der aus der EP 0261266 B1 bekannten Schwenkverschlußvorrichtung ist die das Türschild ausmachende Grundplatte mit ihrer einen Ausformung oder mit ihrem einen Ansatz in einer ersten rechteckigen Öffnung im Türblattblech angeordnet, die im Bereich der Schwenkhebelanlenkung vorgesehen ist, während eine zweite Ausformung oder Ansatz vorgesehen ist, um ein in dem freien Schwenkhebelende gelagertes Zylinderschloß aufnehmen zu können. Die hier beschriebene Verschlußeinrichtung bzw. deren Grundplatte hat annähernd die Länge des Schwenkhebels. Die beiden Durchbrüche sind bezüglich der Längsachse axialsymmetrisch angeordnet und es ist daher möglich, den Verschluß in diese zwei gleich großen Rechteckdurchbrüche derart zu montieren, daß sich eine Umstellbarkeit von rechts auf links ergibt. Das Schloß selbst sitzt allerdings außermittig. Diese Außermittigkeit des Antriebsbereichs hat Nachteile. Im Gegensatz dazu hat der Verschluß gemäß der EP 0504044 A1 drei gleich große Rechteckdurchbrüche, wobei der mittlere dieser Durchbrüche mittig zum Türblatt angeordnet ist, wie die Figur 14 dieser Entgegenhaltung zeigt. Die bekannten Schwenkhebelverschlußeinrichtungen können für verschiedene Türverschlüsse eingesetzt werden, besonders günstig ist ihr Einsatz jedoch in Verbindung mit Stangenverschlüssen, insbesondere mit Flachstangenverschlüssen, weil letztere eine besonders günstige Unterbringungsmöglichkeit in engen Profilräumen ermöglichen, wie beispielsweise im Verkantungsraum von Blechschranktüren.

Die Befestigung des Türschildes erfolgt mit Hilfe von in die gleich großen, insbesondere rechteckigen Durchbrüche des Türblatts einsetzbaren oder die Durchbrüche hintergreifenden Ansätzen der Grundplatte des Türschildes oder mit Hilfe eines Kappen- oder Halteteils, welches jeweils von der Türinnenseite her aufgeschraubt wird (letzteres ist bei der EP 0261266 B1 der Fall).

Die bekannten Schwenkhebelverschlußvorrichtungen erfordern wenig Raum und sind für links- wie auch für rechtsseitig anschlagende Türen geeignet. Bei dem Beschlag gemäß der EP 0261266 B1 ist allerding für eine nachträgliche Änderung des Anschlags eine Demontage der wenigstens einen Verschlußstange und des Schlosses erforderlich, bei beiden bekannten Verschlüssen ist außerdem die im Bereich der Grundplatte geführte Verschlußstange möglicherweise hinderlich bei der konstruktiven Gestaltung, insbesondere im Bereich des Zylinderschlosses. Will man dies vermeiden und verkröpft man die Verschlußstange, verteuert man die Herstellungskosten, macht die Anordnung komplizierter und die Montage umständlicher.

Der Erfindung liegt die Aufgabe zugrunde, eine funktionssichere Verschlußvorrichtung zu schaffen, die eine einfache Konstruktion aufweist und bevorzugt für Schränke und Gehäuse mit schmalen Gegenanschlägen geeignet ist. Außerdem soll mit gleichen Bauteilen eine Montage an rechts- und linksanschlagende Türen möglich und eine nachträgliche Änderung der Anschlagsseite mit einem besonders geringen Aufwand verbunden sein, wobei insbesondere möglich sein soll, mit unverkröpften Verschlußstangen zu arbeiten.

Gelöst wird die Aufgabe dadurch, daß das Türschild einen ersten und einen zweiten Türschildbereich aufweist, wobei der erste Türschildbereich von der Grundplatte gebildet ist, deren Ausformungen als obere und untere Halteblöcke in Aussparungen des Türblattes fixierbar sind, während der zweite Türschildbereich von einem mit der Grundplatte verbundenen Seitenansatz gebildet ist, an dessen Innenseite als Zuhaltung eine vertikal verstellbare Schubplatte gelagert ist, daß die Schubplatte einen ersten, zu ihrer Mittelachse ausgerichteten Durchbruch zur Aufnahme einer von dem Verschlußgehäuse ausgehend Nase aufweist, sowie entlang der Längsachse zu dieser Ausnehmung jeweils in einem Abstand X zwei weitere Ausnehmungen, wobei der Abstand X die Entfernung ist, die die Schubplatte zurücklegt, wenn der Schwenkhebel um 90° gedreht wird.

Durch diese Gestaltung ergeben sich drei unterschiedliche Anwendungsmöglichkeiten für einen derartig gebildeten Schwenkhebelverschluß, ohne daß er von dem Türblatt demontiert werden müßte: Zum einen könnte der Schwenkhebel in einer solchen Stellung verschließbar sein, bei der der Schwenkhebel nach unten weist, während eine dazu senkrechte Stellung die Offenstellung des Verschlusses zum Inhalt hätte. Der obere zur Aufnahme des Schwenkhebels dienende Anlenkungsbereich in der Grundplatte könnte dann durch einen Blindeinsatz verschlossen sein.

Alternativ könnte auch umgekehrt die untere Ausformung unbenutzt bleiben und ggf. durch einen Einsatz verschlossen werden, während die obere Ausformung die Aufnahme für das Zylinderschloß bildet und dort die Stellung des Schwenkhebels darstellt, in der Schaltschrank o. dgl. verschlossen und verriegelt ist. Auch bei dieser zweiten Alternative wäre die waagerechte Stellung des Schwenkhebels diejenige, in der die Tür geöffnet werden könnte.

Schließlich ist eine dritte Alternative denkbar, bei der die sowohl nach unten weisende Stellung des Schwenkhebels wie auch die nach oben weisende Stellung des Schwenkhebels jeweils zu einem Verschließen der Tür führen würde, während eine dazu senkrechte waagerechte Stellung des Schwenkhebels die Offenstellung des Schaltschrankes wäre.

Durch entsprechende andere Bemaßung könnte sogar eine vierte Alternative verwirklicht werden, bei der die eine Stellung des Schwenkhebels (beispielsweise die nach oben weisende) die Verschlußstellung wäre, während die zweite, um 180° nach unten gedrehte Stellung des Schwenkhebels eine Offenstellung wäre, so daß im Verlauf des Schwenkens um 180° die Verschlußeinrichtung vom verschlossenen Zustand in den offenen Zustand gelangen würde, und umgekehrt. Ein besonders günstiger Anwendungsfall für die erfindungsgemäße Schwenkhebelvorrichtung ist diejenige mit einer Verschlußstange, welche über eine Zuhaltung in Wirkverbindung mit dem Schwenkhebel und einem Gelenkdornritzel steht und mit schrankseitigen Aufnahmen für Verriegelungselemente versehen ist, die im Bereich der Verschlußstange ausgebildet sind.

Das Türschild besitzt, wie bereits ausgeführt, erfindungsgemäß einen ersten und einen zweiten Türschildbereich, wobei der erste Türschildbereich von der Grundplatte gebildet ist, deren Ausformungen als obere und untere Halteblöcke in Aussparungen eines Türblatts fixierbar sind, während ein zweiter Türschildbereich von einem mit der Grundplatte verbundenen Seitenansatz gebildet ist, an dessen Innenseite als Zuhaltung eine vertikal verstellbare Schubplatte gelagert ist. Sind nun gemäß einer Weiterbildung Grundplatte und Seitenansatz einstückig, verliert zwar gegenüber dem Stand der Technik die Grundplatte ihre Längsachsensymmetrie, das wird jedoch ausgeglichen durch die erfindungsgemäß gegebene Querachsensymmetrie, so daß gleichwohl wiederum eine Rechts-Links-Umstellbarkeit ermöglicht wird, und zwar ohne jeden Umbau oder Demontage des Schwenkhebelverschlusses. Gemäß einer anderen Weiterbildung der Erfindung können aber die Grundplatte und der Seitenansatz mehrstückig sein, nämlich aus zwei miteinander verbindbaren Teilen bestehen.

In beiden Fällen ergibt der Seitenansatz als weiteren Vorteil eine für bestimmte Anwendungsfälle günstigere Unterbringungsmöglichkeit für die Verschlußstangen und deren Antrieb, da zum einen eine Verkröpfung, zum anderen ein Durchbruch für die Betätigungsachse des Schwenkhebels durch das Türblatt hindurch wegfällt. Stattdessen erfolgt der Antrieb der Stangen oberhalb der Ebene des Türblattes durch ein Ritzel, daß in die Schubplatte eingreift und diese zur Betätigung von Verschlußstangen hin- und herschiebt. Die Verbindung zwischen der Schubplatte und den jeweils verwendeten Verschlußstangen kann sodann dem jeweiligen Anwendungsfall angepaßt werden. Ausführungsformen werden im folgenden näher erläutert. So ist es zu einer schnellen und ggf. nachträglich änderbaren Befestigung günstig, wenn die Aussparungen, in denen die Grundplatte mit dem oberen und unteren Halteblock gehalten ist, im Bereich einers oder nahe einem Hut- und Abkantungsprofil des Türblattes angeordnet sind. wobei die Aussparungen zweckmäßigerweise komplementär zu den insbesondere rechteckförmigen Halteblöcken ausgebildet sind und eine Befestigung der Halteblöcke mit dem Befestigungselementen vorgesehen ist, welche ggf. vom Hut- oder Abkantprofil oder von der Türblattrückseite her einführbar sind. Zur Befestigung sind im Halteblock Bohrungen vorgesehen, die z. B. mit Öffnungen im U-Profil fluchten, so daß mit Befestigungselementen, beispielsweise Schrauben, die vom U-Profil her eingeführt werden, eine sichere und stabile Befestigung der Grundplatte mit Schwenkhebel und Schließeinrichtung erreicht wird. Andere Befestigungsmöglichkeiten zeigt der Stand der Technik.

Dabei kann auch eine Abdichtung vorgenommen werden, indem zwischen Hutprofil, Türblatt o. dgl. und Halteblöcken bzw. der Grundplatte ein Dichtungsstreifen vorgesehen wird. Darüber hinaus können auch Abdichtungen im Bereich der Befestigungselemente bzw, der Öffnungen vorgenommen werden.

Die bereits erwähnte, an der Innenseite des Ansatzes oder an der Außenfläche des Türblatts als Zuhaltung angeordnete Schubplatte ist dort vertikal verstellbar angeordnet. Die über Handhabe und Gelenkdornritzel betätigbare Schubplatte steht in Wirkverbindung mit einer parallel zur Schubplatte angeordneten Verschlußstange, an der Verriegelungselemente zum Eingriff in schrank- oder gehäuseseitige Aufnahmen vorgesehen sind. Die Verbindung zwischen Verschlußstange und Schubplatte erfolgt mittels eines Mitnehmers oder Betätigungsfingers, der so ausgestaltet werden kann, daß er umlegbar ist und dabei eine einfache Umstellbarkeit des Verschlusses ermöglicht. Desweiteren sind beispielsweise drei verschiedene Montagestellungen möglich, die ebenfalls eine Verstellbarkeit erlauben.

Zur Verschiebung der Schubplatte dient hier ein Gelenkdornritzel, das mit von der Schubplatte getragenen Zähnen kämmt und dadurch der Schubplatte eine vertikale Bewegung aufdrückt, die über den Mitnehmer auf die Verschlußstange übertragen werden kann. Bei geschlossener Tür gelangt dadurch wenigstens ein Verriegelungselement in einen form- und/oder kraftschlüssigen Eingriff mit wenigstens einer entsprechenden schrank- oder gehäuseseitigen Aufnahme.

Besonders raumsparend ist es, wenn das Türschild derartig ausgebildet wird, daß sich eine nahezu formschlüssige Aufnahme des Gelenkdornritzels und der Schubplatte in einem von der Grundplatte und der z. B. damit einstückigen Ansatzplatte gebildeten, relativ flachen Zwischenraum ergibt. Auch die zwischen Schubplatte und Schließstange ausgebildete 90°-Umlenkung verringert den Raumbedarf in horizontaler Richtung. Diese Umlenkung ermöglicht daher die Verwendung eines schmalen Gegenanschlages, d. h. z. B. eines schmalen Hohlprofilrahmens oder Abkantungsraums bei Gehäusen und Schränken. Der Vorteil ist dann, daß ein größerer nutzbarer Innenraum für die Anordnung elektrischer und elektronischer Baugruppen zur Verfügung gestellt werden kann. Weitere Vorteile sind die mögliche Anordnung einer Kabelhalterung oder Kabelführung an der Innenseite des schmalen Profilrahmens, sowie eine bessere Luftzirkulation und Kühlung der Geräte und Baugruppen.

Für die Zentrierung und Befestigung der Grundplatte der Verschlußvorrichtung genügen zwei Durchbrüche, die zweckmäßigerweise die gleiche Größe aufweisen und zur Mittelachse der Tür auch zweckmäßigerweise symmetrisch liegen. Dadurch kann die Tür in einfacher Weise umgedreht werden, ohne daß am Verschluß etwas geändert werden muß. Alternativ kann ein einziger langgestreckter Durchbruch vorgesehen werden.

Ein dritter Durchbruch im Bereich der Schwenkachse des Schwenkhebels kann vorgesehen sein, wenn dies gewünscht wird. Desgleichen können auch zusätzliche Runddurchbrüche im Bereich des Seitenansatzes zur Grundplatte vorgesehen werden, um zusätzliche Stabilität zu erreichen.

Der Mitnehmer, der sich über die nahezu gesamte Länge der Ansatzplatte erstrecken und über Verbindungsbereiche mit der Verschlußstange verbunden sein kann, greift mit einer Nase in eine Ausnehmung der Schubplatte ein, so daß deren vertikale Verstellbewegung auf den Mitnehmer und die Verschlußstange übertragen werden.

Die Verschlußstange, die wie der parallel angeordnete Mitnehmer senkrecht zur Ebene der Schubplatte und Türfläche angeordnet ist, reicht über den Türschildbereich hinaus und ist stabil und einstellbar in mindestens einer starren Führung gehalten. Eine derartige Stangenführung kann beispielsweise aus einem Führungsblock mit einer dem Querschnitt der Verschlußstange angepaßten Ausnehmung ausgebildet sein. Vorzugsweise besitzt die Verschlußstange einen rechteckigen Querschnitt.

Aus Gründen der leichteren Montage und Anpassbarkeit ist es günstig, die Führungsblöcke lösbar und ggf. auch verschiebbar an der Türinnenseite zu befestigen.

Aufgrund der besonderen Formgebung des hier beschriebenen Verschlusses mit den beiden ggf. verriegelbaren Stellungen des Schwenkhebels ist es günstig, wenn auch die Verriegelungselemente eine besondere Form aufweisen, beispielsweise aus zwei horizontal und beidseitig zur Verschlußstange angeordneten Drehelementen bestehen, insbesondere aus zwei Rollen, und aus einer die Schließstange und Rollen in diesen Bereich aufnehmende, dazu komplementär ausgebildeten schrank- oder gehäuseseitigen Aufnahmen, in der diese zwei Rollen sowie die Schließstange form- und kraftschlüssig gehalten sind. Es ist nun günstig, wenn diese Aufnahme ein Einfahren der Rollen in beide Richtungen erlaubt, wobei beispielsweise die Aufnahme beim Ausschwenken des Türblatts mittig erfolgt, so daß beim Verschieben der Rollen von diesem mittigen Aufnahmeraum nach oben oder nach unten sich ein Verriegeln ergibt.

Dabei ist es günstig, vertikal angeordnete Keilflächen vorzusehen, um so das Einführen der Verriegelungselemente zu erleichtern.

### Kurze Beschreibung der Erfindung:

Die Erfindung wird nachfolgend anhand von Ausführungsbeispielen näher beschrieben, die in den Zeichnungen dargestellt sind.

### Es zeigt:

- Fig. 1: in einer Draufsicht eine erfindungsgemäß ausgestaltete Verschlußvorrichtung;
- Fig. 2: die verkleinerte Darstellung dieser Verschlußvorrichtung im Zusammenhang mit in einem Türblatt montierten Verschlußstangen;
- Fig. 3: in einer Seitenansicht, teilweise weggeschnitten, die in Fig. 1 dargestellte Schwenkhebelverschlußvorrichtung;
- Fig. 4: eine Querschnittsansicht der Verschlußvorrichtung entlang der Linien IV-IV der Fig. 2;
- Fig. 5: eine Querschnittsansicht entlang der Linien V-V der Fig. 2;
- Fig. 6: eine Querschnittsansicht entlang der Linien VI-VI der Fig. 2;
- Fig. 7: das zum Verschluß gemäß Fig. 2 gehörende Lochbild;
- Fig. 8: eine Seitenansicht auf den in Fig. 6 dargestellten Verriegelungsbereich;
- Fig. 9: einen axialen Längsschnitt durch ein besonders günstig ausgebildetes Verriegelungsteil;
- Fig. 10: eine Ansicht von rechts auf das Teil gemäß Fig.9;
- Fig. 11: eine Ansicht von oben auf das Teil gemäß Fig. 10;
- Fig. 12: eine Darstellung ähnlich der Fig. 2;
- Fig. 13: eine Seitenansicht der Anordnung gemäß Fig. 12; und
- Fig. 14: ein Lochbild für eine Anordnung gemäß Fig. 12.

### Beste Wege der Ausführung der Erfindung:

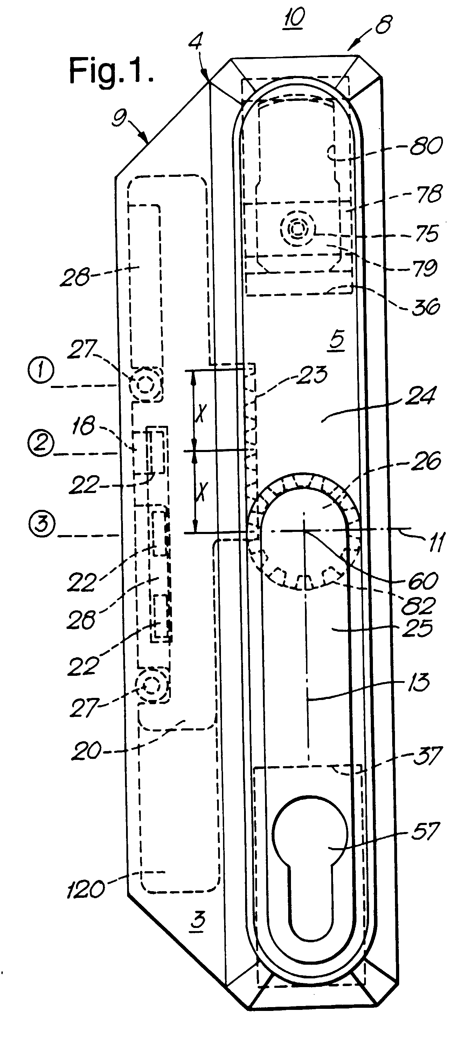

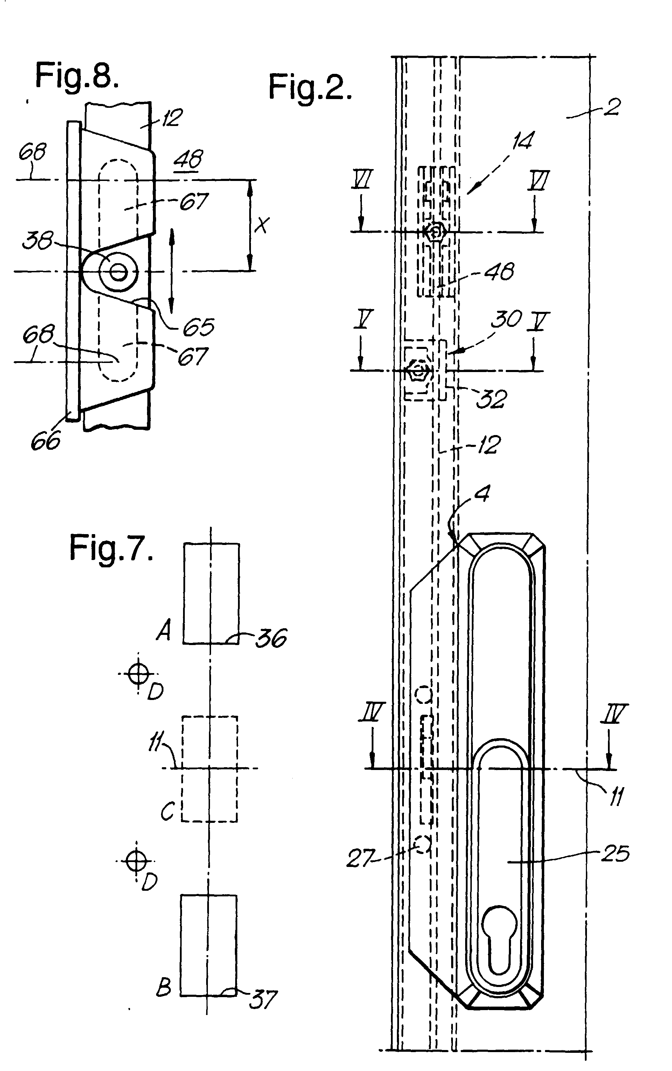

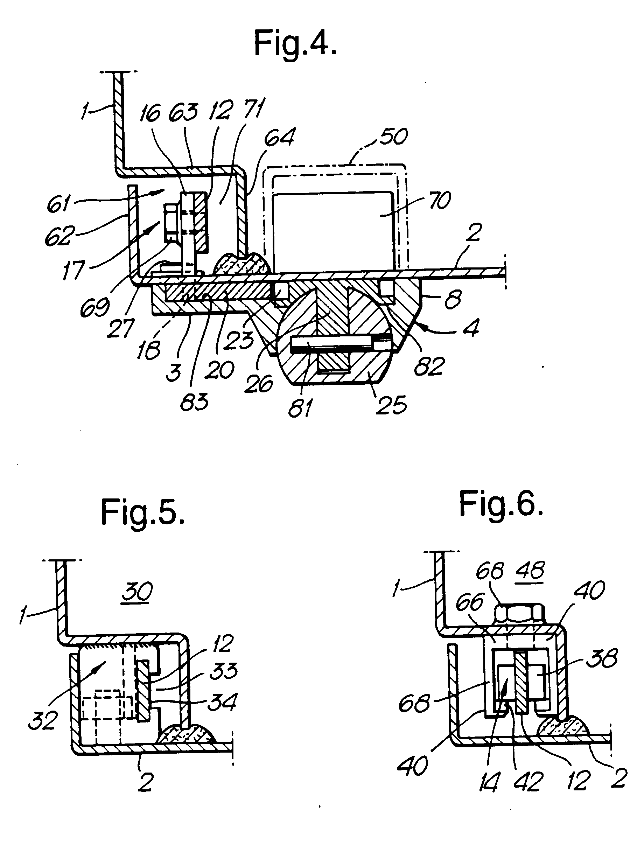

In Fig. 1 ist in Draufsicht ein erfindungsgemäß ausgestaltete Schwenkhebelverschlußvorrichtung 10 zu erkennen, die beispielsweise gemäß Fig. 2 an einer Blechschranktür 2 angebracht ist, die ihrerseits innerhalb eines Rahmens 1 eines Schaltschrankes, eines Blechgehäuses oder dgl. in geeigneter Weise angepaßt ist, siehe die Fig. 4.

Die Schwenkhebelverschlußeinrichtung umfaßt ein Türschild 4, das auf der Außenfläche des Türblatts 2 angebracht ist. Das Türschild 4 umfaßt als einen ersten Türschildbereich 8 eine Grundplatte 5 und als einen zweiten Türschildbereich 9 einen vorzugsweise einstückig damit verbundenen Ansatz 3.

Als Handhabe 6 ist ein Schwenkhebel 25 im Bereich der Grundplatte 5 angeordnet, der in der dargestellten Verschlußstellung über eine schlüsselbetätigbare Schließeinrichtung 56, vorzugsweise ein Zylinderschloß 57, gesichert werden kann. Die Schließeinrichtung, wie Zylinderschloß 57 muß nicht, wie beim dargestellten Ausführungsbeispiel, im Schwenkhebel 25 untergebracht sein, sondern kann auch innerhalb des Türschildes 4 angeordnet werden und in geeigneter Weise den Schwenkhebel in seiner eingeschwenkten Stellung festhalten.

Um eine einfache Umstellung von einer linksanschlagenden Tür, wie sie beispielsweise in Fig. 4 dargestellt ist, in eine rechtseinschlagende Tür vornehmen zu können, ist zum einen die Gesamtanordnung, wie sie in Fig. 1 zu erkennen ist, bezüglich einer die Mittelhalbierende 11 des Türblatts 2 darstellende Linie axial-symmetrisch, wie auch das entsprechende Lochbild im Türblatt um diese Achse 11 axialsymmetrisch ausgeführt ist und beispielsweise die beiden Rechteckdurchbrüche A und B umfaßt, siehe die Fig. 7, oder einen langgestreckten Durchbruch E, siehe Fig. 14. Um daher die erwähnte Umstellung vornehmen zu können, ist es lediglich erforderlich, das Türblatt um 180° zu drehen, so daß numehr der bisher obere Teil des in Fig. 1 erkennbaren Türschildes nach unten gelangt, der vorher linke Teil (Der Ansatz) nach rechts. Wegen der Symmetrie der Anordnung kann der Schwenkhebel z. B. auch wieder in der nach unten geschwenkten Stellung verriegelt werden, so daß es möglich ist, ohne jegliche Änderungen an der Schwenkhebelverschlußeinrichtung eine Umstellung des Anschlags bei dem Türblatt von rechts auf links und umgekehrt vorzunehmen.

Demgegenüber kann eine Umstellbarkeit auch dadurch erreicht, daß die Grundplatte 5 um die Längsachse 13 symmetrisch ausgebildet ist und die Ansatzplatte 3, die dann nicht mit der Grundplatte einstückig ist, wahlweise von der einen Seitenkante der Grundplatte 5 auf die andere Seitenkante umgesetzt wird. Das ist aber aufwendiger und mit gewissen Montagearbeiten verbunden, um die Umstellbarkeit von rechts auf links vorzunehmen.

Die Montage könnte innerhalb eines Hutprofils 50 erfolgen, oder aber einfach in den auf der Hinterfläche des Türblatts 2 gebildeten Freiraum, siehe Fig. 4, wobei die eine oder die andere Art der Montage relativ gleichgültig ist, weil die eigentlichen, raumverbrauchenden Verschlußstangeneinrichtungen nicht, wie bei der EP 0 261 266 B1, durch diesen Bereich hindurchlaufen, sondern stattdessen durch einen versetzt dazu angeordneten, parallel zur Längsachse 13 verlaufenden Bereich, der im wesentlichen unterhalb des Ansatzes 3 liegt und der in Fig. 4 innerhalb des Abkantungsraumes 61 liegt, der einerseits von der Abkantung 62 des Türblatts 2 und andererseits von den Abkantungen 63, 64 des Türrahmens 1 oder dgl. gebildet wird, wie Fig. 1 deutlich erkennen läßt. Die auch im Stand der Technik vorhandenen Verschlußstangen, die hier wie dort als hochkantstehende Flachstangen 12 ausgebildet sind, lassen sich auch innerhalb dieses Verkantungsraumes 61 in bequemer Weise führen, beispielsweise mittels der in Fig. 5 dargestellten Stangenführung, die auch beim Stand der Technik (dort in Fig. 7) dargestellt ist.

Entsprechend lassen sich auch Verschlußelemente innerhalb dieses Raumes unterbringen, die einerseits aus einem am Türrahmen 1 festgelegten Verriegelungsteil 40 bestehen, andererseits aus von der Flachbandstange 12 getragenen Rollzapfen 38, die in dieses vom Türblatt 1 getragene Bauteil einfahren können. Eine ähnliche Konstruktion zeigt auch bereits der Stand der Technik mit seiner Fig. 6, wobei der Stand der Technik jedoch eine um eine horizontale Achse unsymmetrische Form aufweist, die hier nur beschränkt einsatzfähig wäre.

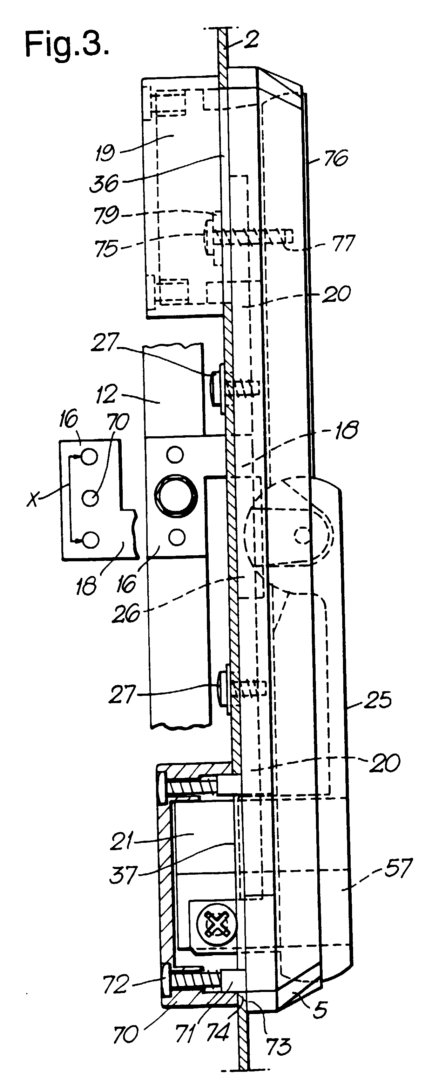

Für die Symmetrie sowohl des Aufbaus wie auch der Betätigungsmöglichkeit ist es gemäß Fig. 8 bis 11 nämlich zweckmäßiger, die als Verschlußelement vorgesehenen hakenförmigen Einlaufelemente für die Doppelrollzapfen 38 zweifach vorzusehen, und zwar derart, daß die Doppelrollzapfen 38 in einer bestimmten Stellung der Verschlußstange 12 in einen konisch sich erweitenden Schlitz 65 einlaufen können, die von den beiden offenen Enden zweier Haken 67 gebildet sind, die auf einer gemeinsamen Basis 66 montiert sind oder von dieser einstückig ausgehen. Diese Basis 66 ist dann ihrerseits wieder mit in Fig. 6 erkennbaren Kopfschraube am Türrahmen 1 festgelegt, siehe beispielsweise die Bezugszahl 68. Die hakenförmigen Gebilde 67 können offen sein, wie es die Fig. 3 des Standes der Technik zeigt, siehe dort die Bezugszahl 38, oder aber zur Erhöhung der Stabilität seitliche Wände 68 aufweisen, um so ein Aufbiegen bei starker Belastung zu verhindern. Weitere Einzelheiten einer alternativen Ausführungsform zeigen die Fig. 9 bis 11, gemäß der eine Basis 166, mittels nur einer Schraube am Türrahmen drehgesichert festlegbar, siehe Rechteckvorsprung 169 im Bereich einer Gewindebohrung 168, zwei Seitenwände 170 trägt, zwischen denen die Stange mit Rollzapfen verschiebbar Platz hat. Diese Wände tragen an ihrem freien Ende Auflaufbereiche 167 bildende Leistenansätze, die zwischen sich einen ausreichenden Freiraum 171 zum Durchtritt der Verriegelungsstange bzw. mittig Freiraum 165 zum Durchtritt auch der Verriegelungszapfen 38 lassen, siehe Fig. 10 und Fig. 9, wobei die Auflaufbereiche 167 einen angeschrägten Bereich 172 zum Anziehen der Tür und einen ebenen Bereich 173 zum Festhalten der Tür aufweist.

Die in Fig. 8 dargestellte Stellung des Zapfens 38 ist die Offenstellung, beispielsweise eine solche Stellung, bei der der Schwenkhebel beispielsweise in die Horizontale geschwenkt ist, während die eingelaufende Stellung, beispielsweise mit in den Hakenbereich hineingelaufenen Rollzapfen 38 nach unten, die Stellung wäre, bei der der Schwenkhebel in seiner unteren (oder oberen) eingeschwenkten Stellung sich befindet, während der Zapfen 38 in die obere Tasche gemäß Fig. 8 eingelaufen ist, wenn der Schwenkhebel in seiner oberen (oder unteren) eingeschwenkten Stellung angeordnet ist.

Durch die geschilderte Symmetrie sowohl hinsichtlich des Schwenkhebelbereichs wie auch der Verschlußelemente gemäß Fig. 8 bzw. 9 bis 11 ergibt sich eine vollkommene Identität der Verhältnisse, seien die Türen nun rechtsanschlagend oder um 180° gedreht linksanschlagend.

Weitere Verstellmöglichkeiten werden im folgenden deutlich werden, indem nun näher auf den in den Fig. 1, 2, 3, und 4 dargestellten Verschluß eingegangen wird.

Fig. 2 ist schematisch eine Gesamtansicht der erfindungsgemäßen Verschlußvorrichtung 10. Wie die Zeichnung erkennen läßt, ist im Bereich des Ansatzes 3 des Türschildes 4 ein stangenförmig ausgebildeter Mitnehmer 16 vorgesehen, der über eine Nase 18 mit einer Schubplatte 20 (siehe die Fig. 1, 3 und 4) in Verbindung steht und mit dieser Schubplatte 20 in vertikaler Richtung verstellt wird. Eine Verschlußstange 12 verläuft oberhalb und unterhalb des Türschildes 4 parallel zum Mitnehmer 16 und ist mit diesem in einem Verbindungsbereich 17 flächig am Mitnehmer 16 angebracht, beispielsweise mit Hilfe eines Schraubbolzens 69, der durch eine von in Fig. 3 erkennbaren drei Bohrungen 70 hindurchgesteckt und dann in eine Gewindebohrung 71 in der Verschlußstange 12 eingeschraubt ist. Wie die Figuren erkennen lassen, ist die Verschlußstange 12 wie auch der Mitnehmer 16 senkrecht zur Innenseite der Tür 2 und auch zur Erstreckungsebene des Ansatzes 3 angeordnet.

Alternativ kann natürlich auch eine parallel zum Türblatt 2 verlaufende Flachbandstange 12 vorgesehen sein, beispielsweise dadurch, daß die Nase 18 nochmals um 90° gebogen ist, um dann mit der Verschlußstange 12 verbunden zu werden, oder es kann sich um eine Rundstange handeln, die in geeigneter Weise mit der Nase 18 in Verbindung steht.

Die Fig. 2 läßt desweiteren erkennen, daß die Verschlußstange 12 oberhalb (wie auch, nicht dargestellt, unterhalb) des Türschildes 4 an der Inennfläche nahe der Abkantung befestigte Stangenführungen 30 (siehe auch Fig. 5) vorgesehen. In relativer Nähe zu derartigen Stangenführungen (zur Entlastung der Stange) sind dann Verriegelungselemente 14 vorgesehen, ebenfalls bereits erwähnt und in Fig. 6 dargestellt, welche zwei beidseitig der Verschlußstange 12 gelagerte Rollen 38 aufweist, mit wenigstens einer schrankbzw. gehäuseseitig angeordneten Aufnahme 40 oder 140, in die diese Rollen einlaufen können. Die Ausbildung dieser Aufnahme wurde bereits im Zusammenhang mit Fig. 8 bzw. 9 bis 11 näher erläutert. Fig. 2 verdeutlicht, daß infolge der senkrecht zur Innenseite der Tür angeordneten Verschlußstange 12 eine funktionssichere Zuhaltung und Verriegelung auch in besonders schmal ausgebildeten schrankseitigen Aufnahmen 40 erfolgen können, so daß auch relativ schmale vertikale Räume bzw. Profilrahmen für Schränke und Gehäuse verwendet werden können, wie es auch beim Stand der Technik der Fall ist.

Durch die Anordnung der Verriegelungselemente bzw. der Stangenführungen in die jeweiligen Eckbereiche ergibt sich eine besonders hohe Stabilität, auch gegen Verdrehung dieser blockförmigen Elemente, selbst dann, wenn diese mit nur einem Befestigungsbolzen befestigt sind, wie es beispielsweise beim Führungselement gemäß Fig. 5 bzw. 9 bis 11 der Fall ist. Aus dem gleichen Grunde kann auch das Verriegelungselement gemäß Fig. 6 bzw. Fig. 8, wie dargestellt, mit zwei Schraubbolzen 68 oder auch nur mit einem Schraubbolzen 68 befestigt sein, wobei sich infolge der Anordnung in der Ecke des Verkantungsraums die Gefahr reduziert, daß eine Verdrehung erfolgt, die die Leichtgängigkeit beeinträchtigen würde.

Fig. 3 zeigt, daß der Schwenkhebel 120 nahezu die Ausbildung hat, die bereits aus dem Stand der Technik bekannt ist, siehe beispielsweise dort die Fig. 31. Die in Fig. 31 unten dargestellte Aufnahme für das freie Ende des Schwenkhebels mit darin angeordnetem Zylinderschloß ist bei der erfindungsgemäßen Ausbildung gemäß Fig. 3 wiederum auch noch am oberen Ende vorhanden, so daß bei Bedarf der Schwenkhebel 25 nicht nur in die in Fig. 3 erkennbare untere Stellung eingeschwenkt werden kann, sondern auch in eine um 180° nach oben gedrehte Stellung.

Soll diese Möglichkeit vorhanden sein, wird man die in Fig. 3 dargestellte langgestreckte Grundplatte 5 jeweils am oberen und unteren Ende z. B. mit einer Abdeckkappe 70 ausstatten, diese mit zwei in von der Grundplatte 5 gebildete Gewindebohrungen 71 einschraubbaren Schrauben 72 festlegen und dabei das Türblatt 2 zwischen die Randbereiche 73 der Grundplatte einerseits und der Becherkanten 74 der Abdeckkappen 70 andererseits einklemmen und dadurch die Gesamtanordnung innerhalb des Türblattes festlegen, wobei zur Zentrierung der Grundplatte 5 innerhalb der von dem Türblatt gebildeten Durchbrüchen beispielsweise sind das die in Fig. 7 erkennbaren Rechteckdurchbrüche A und B, bzw. 36, 37, wobei zur Zentrierung entweder die in Fig. 3 erkennbaren, zur Aufnahme der Schrauben 72 dienenden vorspringenden Gewindebohrungsbereiche 71 dienen könnten, oder andere Nasen oder Kanten, die sich an die Umfangskanten der Durchbrüche 36, 37 anlegen können.

Eine andere Befestigungsart zeigt die Fig. 13, gemäß der in von der Grundplatte gebildete Gewindebohrungen 175 Schrauben 174 einbringbar sind, die noch durch Bohrungen oder Einschnitte 176 im Lochbild E gemäß Fig. 14 geführt sind. Die Kappen 270 sind in diesem Fall durch das Langloch E hindurchführbar, stützen sich also nicht auf dem Türblatt ab, wie bei Fig. 3, sondern sind mit der Grundplatte 5 z. B. durch Kleben oder Ultraschallschweißen dicht verbunden. Ein auf dem Randbereich des Durchbruchs E aufliegendes umlaufendes Dichtungsblatt 177 kann die übrigen Teile abdichten.

Fig. 3 zeigt noch weitere Befestigungsmöglichkeiten, so eine Schraube 75, die einen Stopfen oder Einsatz 76 festhält, der die trogförmige Aufnahme für den Schwenkhebel 75 im oberen Teil der Grundplatte 5 verschließt und ausfüllt, für den Fall, daß nur die untere Aufnahme gemäß Fig. 3 für den Schwenkhebel 25 benötigt wird. Dieser Stopfen oder Einsatz 76 ergibt ein besseres ästhetisches Aussehen, verhindert das Eindringen von Schmutz und Staub und kann auch dazu dienen, durch Verwendung von entsprechend anders gefärbtem Material für die Oberfläche dieses Einsatzes oder durch Anbringung von entsprechenden Bezeichnungen und Kennzeichen eine Individualisierung des Schwenkhebelverschlusses hinsichtlich des Herstellers oder auch hinsichtlich des Anwenders vorzunehmen. Festgehalten wird dieser Einsatz beispielsweise dadurch, daß er ein Sackgewindeloch 77 aufweist, in das die Schraube 75 eingedreht werden kann, die sich mit ihrem Kopf in geeigneter Weise auf der Innenfläche des Türblattes 2 abstützt, in welchem Falle diese Schraube 75 gleichzeitig eine Befestigung für die Grundplatte 5 darstellen würde, oder aber auf einer von der Grundplatte 5 selbst gebildete Fläche 78, auf der sich eine Platte 79 abstützt, die ihrerseits dann den Kopf der Schraube 75 festhält.

Die Fläche 78 ergibt sich beispielsweise einfach dadurch, daß die in der Grundplatte 5 vorgesehene Durchbruchöffnung 80 zur Aufnahme des das Zylinderschloß 57 enthaltenen Ende des Schwenkhebels 25 einen Randbereich 78 beläßt, auf den sich dann die Platte 79 abstützen kann.

Der Ansatz 3 kann, da er mit der Grundplatte 5 vorzugsweise einstückig ist, ebenfalls dazu dienen, die Grundplatte im Türblatt festzuhalten, beispielsweise mit Hilfe von Schrauben 27, die durch Durchbrüche D gemäß Fig. 7 geführt sind und die Fig. 1 wie auch in Fig. 3 deutlicher herausgestellt sind. Diese Schrauben legen sich einerseits mit ihrem Kopf (unter Zwischenlage ggf. einer Beilagscheibe) an die Innenfläche des Türblatts 2 an, andererseits sind sie in eine entsprechende Gewindebohrung des Ansatzes 3 geführt, um diesen besser am Türblatt festzuhalten. Die in diesem Bereich verlaufende und jetzt noch näher zu beschreibende Platte 20 kann entsprechende Einschnürungen aufweisen, um in ihrer Bewegung von diesen Schrauben nicht behindert zu werden.

Ein Schließen und Öffnen der Verschlußvorrichtung 1 erfolgt, wenn der Schwenkhebel 25 aufgeschwenkt und das im Bereich der Schwenkachse 53 angeordnete Gelenkdornritzel 26, welches als Schloßnuß dient, entsprechend verstellt wird. Diese Verstellbewegung wird z. B. durch kämmende Zähne 23 der Schubplatte 20 in eine vertikale Bewegung umgesetzt und über den Mitnehmer 16 auf die Verschlußstange 12 und an die auf der Verschlußstange 12 angeordneten, wenigstens einmal vorhandene Verriegelungselemente 14 übertragen. Alternativ kann anstelle des Gelenkdornritzels auch ein Finger vorgesehen werden, der in die Schubplatte eingreift, um die vertikale Bewegung zu bewirken, oder ein gabelförmiges Teil, welches mit dem Schwenkhebel verbunden ist und direkt den Mitnehmer 16 antreibt.

Fig. 1 und Fig. 3 wie auch die Fig. 4 zeigen in einer Draufsicht, in einer Seitenansicht und einer Ansicht von oben die raumsparende, formschlüssige Aufnahme der Schubplatte 20 in einem von dem Ansatz 3 und der Tür 2 gebildeten Zwischenraum. Die Verbindung zwischen der Schubplatte 20 und der Verschlußstange 12 erfolgt über eine Nase 18, die am Mitnehmer 16 ausgebildet ist und die in eine seitlich angeordnete Ausnehmung oder Durchbruch 22 eingeschoben ist. Dabei ist der Ritzelumfang und dessen Anzahl der Zähne und die Anzahl der Zähne 23 der Schubplatte 20 so ausgestaltet, daß eine Drehung des Ritzels 26 um 90° eine Verschiebung um z. B. drei Zahnabstände (Entfernung X gemäß Fig. 1) erfolgt, bei einer weiteren Drehung um 90°, insgesamt also um 180°, eine Verschiebung um sechs Zahnabstände, oder zwei X. Diese Entfernung von zwei X entspricht genau dem Abstand zwischen den Linien 1, 2 und 3, die in Fig. 1 zu erkennen sind, und entspricht somit der Betätigungslänge, die bei einem Verschwenken des Hebels um 180° sich für die Schubplatte wie auch für die an die Schubplatte angelenkten Verschlußstangen ergibt. Bei einer Verschwenkung des in Fig. 1 erkennbaren Schwenkhebels 55 aus der dargestellten unteren Lage in die um 180° nach oben verschwenkte Lage würde daher die Schubplatte 20 sich von der gestrichelt dargestellten oberen Lage (Bezugszahl 20) in eine Lage verschiben, die in der Fig. 1 mit der Bezugszahl 120 versehen ist. Dabei gleitet der ausgesparte Teil 28 der Schubplatte 20 an der oberen Befestigungsschraube 27 vorbei.

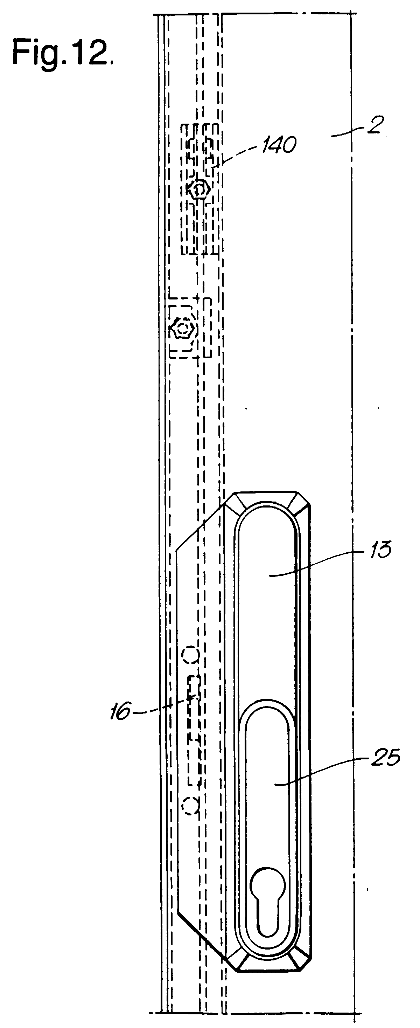

Bei einem Verschlußelement gemäß Fig. 18 gelangt bei dieser Bewegung der Rollzapfen 38 aus der Offenstellung, wie er in Fig. 8 zu erkennen ist, in eine der beiden möglichen Verschlußstellungen, beispielsweise in die nach oben geführte Verschlußstellung durch Verschiebung um die Entfernung X. Umgekehrt kann ein Verschließen auch dadurch erfolgen, daß der Rollzapfen 38 nach unten um diese Entfernung X verschoben wird.

Manchmal kann es sinnvoll sein, die Verschlußlage dadurch zu ändern, daß aus einer Schwenkhebelstellung, die vorher eine offene Tür bedeutet hat, eine Schwenkhebelstellung zu machen, die eine verschlossene Tür beinhaltet und umgekehrt. In diesem Falle ist es möglich, die Nase 18 des Mitnehmers 16 aus der einen Ausnehmung der drei vorhandenen Ausnehmungen 22 herauszunehmen und in eine um die Länge X entfernte zweite Ausnehmung einzuhängen.

Desweiteren ist es möglich, dabei den Mitnehmer 16 auf der Verschlußstange 12 so umzusetzen, daß sich dabei die Stellung der Verschlußstange 12 nicht ändert, wie die Fig. 3 erkennen läßt. Zu diesem Zweck braucht nur die Schraube 69 gelöst zu werden, woraufhin der Mitnehmer 16 abgehoben und um 180° derart gedreht wird, daß die Nase 18 von der in der Figur dargestellten oberen Stellung in die untere Stellung gelangt, woraufhin dann der Mitnehmer 16 wieder mittels der Schraube 69 auf der Schubstange 12 aufgeschraubt wird. Nunmehr steckt die Nase statt in der oberen Ausnehmung 22 gemäß Fig. 1 in der mittleren Ausnehmung 22 gemäß Fig. 1.

Der Querschnitt gemäß Fig. 4 verdeutlicht das Zusammenwirken des Schwenkhebels 25, des Gelenkdornritzels 26, an dem der Schwenkhebel 25 über einen Gelenkstift 81 angelenkt ist, mit der Schubplatte 20, wobei das Gelenkdornritzel in einem Ringraum 82 drehbar und axial arretiert gelagert ist, der in der Grundplatte 5 gebildet ist. Die Grundplatte 5 hindert somit durch die entsprechende Kante des Ringraums 82 das Ritzel daran, von dem Schwenkhebel 25 nach außen gezogen zu werden, umgekehrt wird das Ritzel aber auch von dem Schwenkhebel gegen die Kante 82 gedrückt, so daß eine stabile Drehlagerung sich ergibt. Mit den Zähnen dieses Ritzels kämmt dann die Zahnreihe 23 der Platte 20, die dabei zwischen den Ebenen des Türblatts 2 und der inneren Fläche 83 des Ansatzes 3 gleitend mit geringem Spiel gelagert ist.

Fig. 12 läßt in Verbindung mit Fig. 3 bis 6 erkennen, daß der Mitnehmer 16 (mit zugehörigem Schlitz) außerhalb des Dichhtungsbereiches des Schrankes liegt, der Schlitz im Abkantungsbereich des Türblatts ergibt daher keine Undichtigkeit. Der Schlitz kann auch als Anschlag für die Bewegung des Mitnehmers 16 dienen, indem er nur eine bestimmte Längserstreckung aufweist. Dadurch läßt sich beispielsweise die Offenstellung für den Benutzer eindeutig definieren - er muß den vom Verriegelungsteil 40 bzw. 140 gebildeten Einlaufbereich für die Rollen 38 nicht "suchen", sondern mit Erreichen des Anschlags stehen die Rollen dann genau über z. B. der Öffnung 165. Um diese Stellung verändern zu können, können wiederum in der Stange 12 und/oder dem Mitnehmer 16 mehrere, axial verschobene Öffnungen 70 vorgesehen werden, ebenso wie das schon erwähnte Umsetzen des Mitnehmers eine Umstellung ermöglicht.

### Gewerbliche Auswertbarkeit:

Die Vorrichtung ist z. B. im Schaltschrankbau gewerblich auswertbar.

## Patentansprüche

1. Schwenkhebelverschlußvorrichtung (10) für Türen (2) von Gehäusen oder Schränken (1), vorzugsweise aus dünnem Wandmaterial wie Stahlblech, insbesondere zur Betätigung von im Abkantungsraum von Blechschranktüren einbringbare Verriegelungssysteme wie Verschlußstangen, die Schwenkhebelverschußvorrichtung (10) bestehend aus einem Türschild (4), welches eine Grundplatte (5) mit einem Schwenkhebel (25) als Handhabe und mit Ausformungen (z. B. 71) zum Eingriff in türseitige Aussparungen (36, 37) aufweist, wobei eine erste Ausformung (z. B. 71) an einem Ende des Türschilds (4) im Bereich einer Schließeinrichtung (57) für den Schwenkhebel (25) gebildet ist, und eine andere oder zweite Ausformung (z. B. 71) am anderen Ende des Türschilds (4) ausgebildet ist, die bezüglich der Betätigungsachse (60; 11) des Schwenkhebels (25) rotationssymetrisch um 180° versetzt am Türschild angeordnet ist, wobei eine Verschlußstange (12) vorgesehen ist, welche über eine Zuhaltung (14) in Wirkverbindung mit dem Schwenkhebel (25) und einem Gelenkdornritzel (26) steht und schrankseitigen Aufnahmen (z. B. 65) für Verriegelungselemente (z. B. 38) versehen ist, die im Bereich der Verschlußstange (12) ausgebildet sind, dadurch gekennzeichnet, daß das Türschild (4) einen ersten (8) und einen zweiten Türschildbereich (9) aufweist, wobei der erste Türschildbereich (8) von der Grundplatte (5) gebildet ist, deren Ausformungen als obere und untere Halteblöcke (19, 21) in Aussparungen (36, 37) des Türblatts (2) fixierbar sind, während der zweite Türschildbereich von einem mit der Grundplatte (5) verbundenen Seitenansatz (3) gebildet ist, an dessen Innenseite als Zuhaltung (7) eine vertikal verstellbare Schubplatte (20) gelagert ist, und daß die Schubplatte (20) einen ersten, zu ihrer Mittelachse ausgerichteten Durchbruch (22) zur Aufnahme einer von der Verschlußstange ausgehenden Nase (18) aufweist, sowie entlang der Längsachse zu dieser Ausnehmung jeweils in einem Abstand X zwei weitere Ausnehmungen (22), wobei der Abstand X die Entfernung ist, die die Schubplatte (20) zurücklegt, wenn der Schwenkhebel um 90° gedreht wird.

2. Schwenkhebelverschlußvorrichtung nach Anspruch 1, dadurch gekennkeichnet, daß Grundplatte (5) und Seitenansatz (3) entweder einstückig sind oder aus zwei miteinander verbindbaren Teilen bestehen.

3. Verschlußvorrichtung nach Anspruch 1 oder 2, dadurch gekennzeichnet, daß im Bereich des Türschildes (4) ein Mitnehmer (16) mit der Verschlußstange (12) verbunden ist.

4. Verschlußvorrichtung nach einem der vorhergehenden Ansprüche, dadurch gekennzeichnet, daß das Gelenkdornritzel (26) über kämmende Zähne (23, 24) mit der Schubplatte (20) und diese über den Mitnehmer (16) mit der Verschlußstange (12) verbunden ist, und daß das Gelenkdornritzel (26) und die Schubplatte (20) nahezu formschlüssig von der Grundplatte (5) und/oder dem Seitenansatz (der Ansatzplatte) (3) aufgenommen sind.

5. Verschlußvorrichtung nach einem der vorhergehenden Ansprüche, dadurch gekennzeichnet, daß der Mitnehmer (16) an der Innenseite der Tür (2) und im Bereich des Seitenansatzes (der Ansatzplatte) (3) verstellbar und über Verbindungsbereiche (17) mit der Verschlußstange (12) verbunden ist, und daß der Mitnehmer (16) die von der Verschlußstange ausgehende Nase bildet, welche Nase (18) in einer Ausnehmung (22) der im rechten Winkel zur Mitnehmerebene verlaufenden Schubplatte (20) geführt ist.

6. Verschlußvorrichtung nach einem der Ansprüche 1 bis 5, dadurch gekennzeichnet, daß die Nase (18) von einem Formstück gebildet wird, das aus einem Nasenbereich (18) und einem Mitnehmerbereich (16) gebildet ist, wobei der Nasenbereich (18) an einem Ende des Mitnehmerbereichs (16) angeordnet ist, und der Mitnehmerbereich (16) eine solche Längserstreckung aufweist, daß er annähernd die Länge der Nasenbreite zuzüglich dem Abstand (der Entfernung) X aufweist.

7. Verschlußvorrichtung nach Anspruch 6, dadurch gekennzeichnet, daß der Mitnehmerbereich in der zur Achse der verschlußstangen (12) ausgerichteten Längsachse drei Bohrungen aufweist, durch die Befestigungsschrauben (69) hindurchführbar sind, die in einer von der Verschlußstange (12) gebildeten Gewindebohrung (71) aufnehmbar sind, wobei der axiale Abstand der Bohrungen einen Bruchteil, ein Einfaches oder ein Vielfaches der Entfernung X ausmacht.

8. Verschlußvorrichtung nach einem der Ansprüche 1 bis 7, dadurch gekennzeichnet, daß neben der ersten und der zweiten Ausformung an den Enden des Türschildes (4) noch zumindest eine dritte Ausformung im Bereich der Türschildmitte (11) angeordnet ist.

9. Verschlußvorrichtung nach einem der vorhergehenden Ansprüche 1 bis 8, dadurch gekennzeichnet, daß die Schubplatte (20) mit Befestigungselementen (27) am Ansatz (3) befestigt ist, und daß im Bereich der Befestigungselemente (27) vertikale Ausnehmungen (28, 29) in der Schubplatte (20) ausgebildet sind.

10. Verschlußvorrichtung nach einem der Ansprüche 1 bis 9, dadurch gekennzeichnet, daß das Türschild (4) außerhalb der Halteblöcke (19, 21) in seiner zum Türblatt (2) weisenden Fläche Gewindebohrungen aufweist, in die durch das Türblatt hindurchreichende Befestungsschrauben (27) einbringbar sind.

11. Verschlußvorrichtung nach einem der vorhergehenden Ansprüche 1 bis 10, wobei beiderseits der Verschlußstange (12) im Bereich der schrankseitigen Aufnahmen (40) Rollen (38) oder Vorsprünge vorgesehen sind, die mit der Verschlußstange (12) das Verriegelungselement (14) bilden, und wobei eine komplementär ausgebildete und vertikale Auflaufflächen (42) aufweisende Aufnahme (40) vorgesehen ist, in die das Verriegelungselement (14) in Verschlußstellung eingreift, dadurch gekennzeichnet, daß die Aufnahmen (40), die vorzugsweise im Abkantungsbereich eines Schrank- oder Gehäuserahmens befestigt sind, als Doppelhaken (41) mit einer zur Tür (2) gerichteten Abstandsöffnung (48) für die Schließstange (12) ausgebildet sind, wobei die vertikale Keilfläche der beiden Doppelhaken sich zu einer gemeinsamen Symmetrielinie hin öffnen, an welcher Symmetrielinie ein Aufnahmeschlitz für die Rollen (38) oder dgl. vorgesehen ist.

## Claims

1. Swivel lever closure device (10) for doors (2) of housings or cabinets (1), preferably made of thin wall material such as sheet steel, particularly for operating interlock systems like closure rods, which can be incorporated in the opening clearance area of sheet metal cabinet doors, the swivel lever closure device (10) consisting of a door plate (4) which has a base plate (5) with a swivel lever (25) as a grip and with mouldings (e.g. 71) for engagement in recesses (36, 37) on the door side, an initial moulding (e.g. 71) being formed at one end of the door plate (4) in the area of a closing device (57) for the swivel lever (25), and another or second moulding (e.g. 71) being formed at the other end of the door plate (4), which is fitted with respect to the operating axis (60; 11) of the swivel lever (25) in a rotationally symmetrical manner offset by 180° from the door plate, a closure rod (12) being provided which via a holding device (14) is in an operative connection with the swivel lever (25) and a hinged mandrel pinion (26) and provided with receptacles (e.g. 65) on the cabinet side for interlocking elements (e.g. 38), which are formed in the area of the closure rod (12), characterized in that the door plate (4) has a first (8) and a second door plate area (9), the first door plate area (8) being formed by the base plate (5), whose mouldings as upper and lower holding blocks (19, 21) can be fixed in recesses (36, 37) of the door leaf (2), whilst the second door plate area is formed by a side shoulder (3) connected to the base plate (5) on the inside of which, as a holding device (7), a vertically adjustable push plate (20) is mounted and that the push plate (20) has a first aperture (22) aligned with its centre axis for accommodating a nose (18) emerging from the closure rod and along the longitudinal axis of this recess two further recesses (22) at an interval X, respectively, the interval X being the distance which the push plate (20) travels when the swivel lever is turned by 90°.

2. Swivel lever closure device according to Claim 1, characterized in that the base plate (5) and the side shoulder (3) are either one-piece or consist of two interconnectable parts.

3. Closure device according to Claim 1 or 2, characterized in that in the area of the door plate (4), a carrier (16) is connected to the closure rod (12).

4. Closure device as claimed in any one of the preceding claims, characterized in that the hinged mandrel pinion (26) is connected via meshing teeth (23, 24) to the push plate (20) and the latter via the carrier (16) to the closure rod (12), and in that the hinged mandrel pinion (26) and the push plate (20) are accommodated almost in a positive connection by the base plate (5) and/or the side shoulder (the shoulder plate) (3).

5. Closure device as claimed in any one of the preceding claims, characterized in that the carrier (16) on the inside of the door (2) and in the area of the side shoulder (the shoulder plate) (3) is adjustable and connected via connecting regions (17) to the closure rod (12), and in that the carrier (16) forms the nose emerging from the closure rod, which nose (18) is guided in a recess (22) of the push plate (20) running at a riaht angle to the carrier plane.

6. Closure device as claimed in any one of Claims 1 to 5, characterized in that the nose (18) is formed by a shaped piece which is formed from a nose area (18) and a carrier area (16), the nose area (18) being fitted at one end of the carrier area (16), and the carrier area (16) having such a longitudinal extension that it has approximately the length of the nose width plus the interval (distance) X

7. Closure device as claimed in Claim 6, characterized in that the carrier area in the longitudinal axis aligned with the axis of the closure rods (12) has three holes through which the fixing bolts (69) can be fed, which can be accommodated in a threaded hole (71) formed by the closure rod (12), the axial interval between the holes being a fraction, once or many times the distance X.

8. Closure device as claimed in any one of Claims 1 to 7, characterized in that besides the first and second mouldings at the end of the door plate (4), at least a third moulding is arranged in the area of the door plate centre (11).

9. Closure device as claimed in any one of preceding Claims 1 to 8, characterized in that the push plate (20) is fastened with fixing elements (27) to the shoulder (3), and in that in the area of the fixing elements (27), vertical recesses (28, 29) are formed in the push plate (20).

10. Closure device as claimed in any one of Claims 1 to 9, characterized in that the door plate (4) outside the holding blocks (19, 21) in its face pointing towards the door leaf (2) has threaded holes into which fixing bolts (27) reaching through the door leaf can be brought.

11. Closure device as claimed in any one of preceding Claims 1 to 10, wherein on both sides of the closure rod (12) in the area of the receptacles (40) on the cabinet side, rollers (38) or projections are provided which, with the closure rod (12), form the interlock element (14), and wherein a receptacle (40) having complementarily formed and vertical surface running faces (42) is provided, into which the interlock element (14) engages in the closed position, characterized in that the receptacles (40), which are preferably fixed in the opening clearance area of a cabinet or housing frame, are formed as double hooks (41) with a distance aperture (48) directed towards the door (2) for the closure rod (12), the vertical wedge surface of the two double hooks opening into a common line of symmetry, on which line of symmetry a receptacle slot for the rollers (38) or the like is provided.

## Revendications

1. Dispositif de fermeture à levier pivotant (10) pour portes (2) de caissons ou armoires (1), de préférence en un matériau mince, comme une feuille d'acier, notamment pour l'actionnement de dispositifs de verrouillage, comme des tringles de verrouillage, agençables dans l'espace formé par les pliages de portes d'armoires métalliques, dispositif de fermeture à levier pivotant (10) constitué par une plaque de porte (4) qui comporte une plaque de base (5) munie d'un levier pivotant (25) servant de moyen de commande et des parties en saillie (par exemple 7) pour le logement dans des évidements (36,37) pratiqués dans la porte, une première partie en saillie (par exemple 71) étant formée à l'une des extrémités de la plaque de porte (4), dans la zone d'un dispositif de verrouillage (57) du levier pivotant (25), et une autre ou deuxième partie en saillie (par exemple 71) étant formée à l'autre extrémité de la plaque de porte (4), de façon symétrique par rapport à l'axe de commande (60,11) du levier pivotant (25), décalée de 180°, une tringle de verrouillage (12) étant en interaction avec le levier pivotant (25) et un pignon (26) monté sur l'axe de pivotement, via un arrêt (14), et munie d'éléments de verrouillage (par exemple 38) destinés à s'engager dans des logements pratiqués dans l'armoire (par exemple 65), dans la zone de la tringle (12), caractérisé en ce que la plaque de porte (4) comporte une première (8) et une deuxième (9) zone de plaque de porte, la première zone de plaque de porte (8) étant formée par la plaque de base (5) dont les parties en saillie se présentent sous forme de blocs de fixation supérieur et inférieur (19,21) qui sont fixables dans des évidements (36,37) pratiqués dans le panneau de porte (2), tandisque la deuxième zone de plaque de porte est formée par une pièce rapportée (3) solidaire de la plaque de base (5), une plaque coulissante (20) réglable verticalement étant logée à la face intérieure de ladite pièce rapportée (3) et servant d'arrêt (7), et en ce que la plaque coulissante (20) comporte un premier perçage (22) orienté selon son axe médian pour recevoir un ergot (18) solidaire de la tringle de verrouillage, ainsi que deux autres évidements (22), le long de l'axe médian chacun à distance X de ce perçage, la distance X étant la distance parcourue par la plaque coulissante (20) lorsque le levier pivotant tourne de 90°.

2. Dispositif de fermeture à levier pivotant selon la revendication 1 caractérisé en ce que la plaque de base (5) et la pièce rapportée (3) sont d'une seule pièce ou consistent en deux éléments reliables entre eux.

3. Dispositif de fermeture à levier pivotant selon la revendication 1 ou 2 caractérisé en ce que dans la zone de la plaque de porte (4), un tenon d'entraînement (16) est relié à la tringle de verrouillage (12).

4. Dispositif de fermeture à levier pivotant selon l'une des revendications précédentes caractérisé en ce que le pignon monté sur l'axe de pivotement (26) est relié par des dents en interaction (23,24) à la plaque coulissante (20) et cette dernière est reliée par le tenon d'entraînement (16) à la tringle de verrouillage (12), et en ce que le pignon monté sur l'axe de pivotement (26) et la plaque coulissante (20) sont enveloppés approximativement par adaptation des formes, par la plaque de base (5) et/ou la pièce rapportée (la plaque rapportée) (3).

5. Dispositif de fermeture à levier pivotant selon l'une ou plusieurs des revendications précédentes caractérisé en ce que le tenon d'entraînement (16) est réglable sur la face intérieure de la porte (2) et dans la zone de la pièce raportée (plaque rapportée) (3), et est relié à la tringle de verrouillage (12) par des zones de liaison (17), et en ce que le tenon d'entraînement (16) forme l'ergot solidaire de la tringle de verrouillage, ledit ergot (18) étant guidé dans un évidement (22) pratiqué dans la plaque coulissante (20) qui s'étend selon un angle droit par rapport au plan du tenon d'entraînement.

6. Dispositif de fermeture à levier pivotant selon l'une des revendications 1 à 5 caractérisé en ce que l'ergot (18) est formé par une pièce moulée qui est constituée par une zone d'ergot (18) et une zone de tenon d'entraînement (16), la zone d'ergot (18) étant agencée à l'extrémité de la zone de tenon d'entraînement (16), et la zone de tenon, d'entraînement (16) présentant une longueur telle qu'il présente approximativement la longueur de la largeur de l'ergot additionnée de la distance X.

7. Dispositif de fermeture à levier pivotant selon la revendication 6 caractérisé en ce que la zone du tenon d'entraînement comporte trois perçages sur l'axe longitudinal orienté selon l'axe des tringles de verrouillage (12), perçages traversés par des vis de fixation (69) qui sont vissées dans un taraudage (71) pratiqué dans la tringle de verrouillage (12), la distance axiale des perçages correspondant à une fraction de distance X, à la distance X ou un multiple de celle-ci.

8. Dispositif de fermeture à levier pivotant selon l'une des revendications 1 à 7 caractérisé en ce qu'au moins une troisième partie en saillie,en plus de la première et deuxième aux extrémités de la plaque de porte (4), est agencée dans la zone médiane (11) de la plaque de porte.

9. Dispositif de fermeture à levier pivotant selon l'une des revendications 1 à 8 caractérisé en ce que la plaque coulissante (20) est fixée à l'aide de moyens de fixation (27) à la pièce rapportée (3), et en ce que la plaque coulissante (20) est munie d'évidements verticaux (28,29), dans la zone des moyens de fixation (27).

10. Dispositif de fermeture à levier pivotant selon l'une des revendications 1 à 9 caractérisé en ce que la plaque de porte (4) comporte, à distance des blocs de fixation (19,21) des taraudages qui sont pratiqués dans la face orientée vers le panneau de porte (2) et dans lesquels des vis de fixation (27) peuvent s'engager en traversant le panneau de porte .

11. Dispositif de fermeture à levier pivotant selon l'une des revendications 1 à 10, des galets (38) ou éléments en saillie étant prévus des deux côtés de la tringle de verouillage (12) dans la zone des logements (40) dans l'armoire et formant ainsi, avec la tringle de verrouillage (12), l'organe de verrouillage (14), et un logement (40) de forme complémentaire, muni de surfaces de glissement verticales (42), étant prévu pour l'engagement de l'élément de verrouillage (14), en position de verrouillage, dispositif caractérisé en ce que les logements (40) qui sont, de préférence, fixés dans la partie repliée d'un cadre d'armoire ou caisson consistent en des crochets doubles (41) ouverts (48) en direction de la porte (2) pour la tringle de verrouillage (12), les surfaces en coin verticales des deux crochets doubles s'ouvrant sur une ligne de symétrie commune à laquelle est prévue une fente pour le logement des galets (38) ou analogue.
